# EUROPEAN PATENT APPLICATION

(11) **EP 4 700 456 A1**
(43) Date of publication of application: **25.02.2026**
(21) Application number: 24861576.7
(22) Date of filing: 31.05.2024
(51) Int. Cl.: G02B 27/01

(54) **SMART GLASSES**

(30) Priority: 04.09.2023 CN 202311138901
(71) Applicant: Huawei Technologies Co., Ltd., Shenzhen, Guangdong 518129 (CN)
(72) Inventor: CHEN, Qi, Shenzhen, Guangdong 518129 (CN); YANG, Linlin, Shenzhen, Guangdong 518129 (CN); LIN, Guoliang, Shenzhen, Guangdong 518129 (CN); PENG, Cheng, Shenzhen, Guangdong 518129 (CN); LIN, Xiaolong, Shenzhen, Guangdong 518129 (CN)
(74) Representative: Maiwald GmbH
(86) International application number: PCT/CN2024/096614
(87) International publication number: WO 2025/050728

(57) **Abstract**

Smart glasses are provided, to provide a basically constant clamping force for users with different head widths. The smart glasses include a lens frame and frame temples. The frame temple includes a frame temple body and a coil spring adjustment part, the coil spring adjustment part includes a coil spring, a first end of the coil spring is connected to the lens frame, and a second end of the coil spring is connected to the frame temple body. The lens frame and the frame temple body are connected to each other through the coil spring, so that a working area of the coil spring when the frame temple body is expanded outward is set to be within a range in which an elastic force approaches a constant deformation amount by using an elastic force characteristic of the coil spring. In this way, a basically constant clamping force relative to the head is provided by a basically constant elastic force generated by deformation of the coil spring, so that the smart glasses can accommodate to the users with different head widths.

## Description

### CROSS-REFERENCE TO RELATED APPLICATIONS

This application claims priority to Chinese Patent Application No. 202311138901.2, filed with the China National Intellectual Property Administration on September 4, 2023 and entitled "SMART GLASSES", which is incorporated herein by reference in its entirety.

### TECHNICAL FIELD

This application relates to the field of mechanical technologies, and in particular, to smart glasses.

### BACKGROUND

As a new type of smart wearable device, smart glasses combine the latest information technology (information technology, IT) with functions of conventional glasses, and are increasingly popular due to advantages such as portability, usability, and rich functions of the smart glasses.

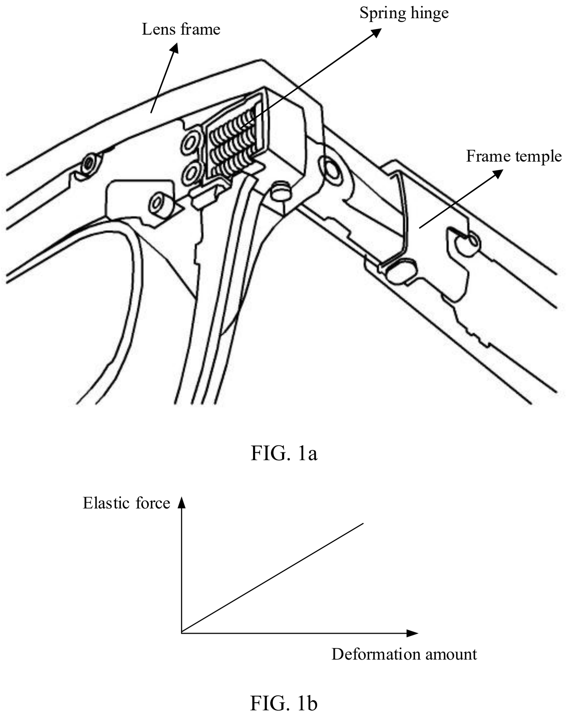

Generally, when the smart glasses are worn, frame temples need to be placed on human ears, to form a clamping force on the head. To make the frame temples more fit to the head, referring to FIG. 1a, a spring hinge is usually disposed at a joint between a frame temple and a lens frame in existing smart glasses, to provide a clamping force on the head through compression or stretching of a spring in the spring hinge. However, the frame temples in the existing smart glasses are poorly fitted to the head of a user. A user with a small head may find the glasses unstable to wear, and a user with a large head may find the glasses too tight and uncomfortable to wear. Therefore, the smart glasses cannot accommodate to users with different head widths.

In conclusion, currently, a structural design of the smart glasses needs to be further studied.

### SUMMARY

This application provides smart glasses, to provide a basically constant clamping force, to accommodate to users with different head widths.

This application provides smart glasses, including a lens frame and frame temples. The frame temple includes a frame temple body and a coil spring adjustment part, the coil spring adjustment part includes a coil spring, a first end of the coil spring is connected to the lens frame, and a second end of the coil spring is connected to the frame temple body.

In the foregoing design, the lens frame and the frame temple body are connected to each other through the coil spring, so that a working area of the coil spring when the frame temple body is expanded outward is set to be within a range in which an elastic force approaches a constant deformation amount by using an elastic force characteristic of the coil spring. In this way, a basically constant clamping force relative to the head is provided by a basically constant elastic force generated by deformation of the coil spring, so that the smart glasses can accommodate to users with different head widths.

In a possible design, a clamping force that can maintain both wearing comfort and wearing stability may be obtained through pre-testing; and then, with reference to an elastic force characteristic curve of the coil spring, the working area (referred to as a first working area) of the coil spring when the frame temple body is expanded outward is set to be within a deformation range corresponding to the clamping force, for example, is set to be within a small deformation range right after a rapid rising period, so that an elastic force provided by the coil spring in the outward expansion process of the frame temple body can be basically constant, and the elastic force can meet requirements of a user for wearing comfort and wearing stability.

It should be noted that a working area (referred to as a second working area) of the coil spring in a non-outward expansion process of the frame temple body (including a folded state of the frame temple body and any state between the folded state and an unfolded state obtained through rotation) is not limited in this application. For example, in some solutions, the second working area of the coil spring may be maintained as a point, that is, the coil spring maintains a fixed deformation amount in the non-outward expansion process. Alternatively, in some other solutions, the second working area of the coil spring may be a deformation amount area in the rapid rising period. In this case, an elastic force provided by the coil spring in the non-outward expansion process is different from an elastic force provided by the coil spring in the outward expansion process. Alternatively, the second working area of the coil spring may be an area between the rapid rising period and the first working area. In this case, an elastic force provided by the coil spring in the non-outward expansion process is basically the same as an elastic force provided by the coil spring in the outward expansion process.

For example, this application provides the following three possible structures of the smart glasses.

### Structure 1

In the structure 1, the coil spring adjustment part may further include a support part, and the support part is connected between the second end of the coil spring and the frame temple body.

According to this design, the support part may connect the second end of the coil spring to the outside of the lens frame, to implement a connection to the frame temple body outside the lens frame.

In a possible design, the lens frame includes a frame body, and the first end of the coil spring is fastened in the frame body.

According to this design, the first end of the coil spring is configured as a fastening end, and the second end of the coil spring is displaced relative to the first end, to drive the frame temple body connected to the second end to rotate relative to the lens frame.

In a further possible design, there is a fastening shaft in the frame body, a first groove is disposed on the fastening shaft, and the first end of the coil spring is embedded into the first groove.

According to this design, the first end of the coil spring may be stuck by the first groove, to be fastened in the frame body. In this fastening manner, preparation is convenient, and no additional fastener needs to be used. This helps reduce costs and structure complexity.

In a further possible design, the support part has a hollow accommodation cavity, and the coil spring and the fastening shaft are embedded into the accommodation cavity. In this way, impurities such as dust can be prevented from entering the cavity to corrode the coil spring and affecting performance of the coil spring.

In a further possible design, a housing of the accommodation cavity has a first opening, and the second end of the coil spring is bent and embedded into the first opening. In this way, the second end of the coil spring may be clamped on the housing of the accommodation cavity, to fasten the second end of the coil spring to the support part.

In a possible design, the coil spring adjustment part may further include a folding adjustment part, and the folding adjustment part is connected between the support part and the frame temple body, and is configured to fold or unfold the frame temple body relative to the support part, to implement a folded state or an unfolded state of the smart glasses.

In a further possible design, there is a limiting component on the lens frame, and the limiting component is configured to limit a rotation range of the support part relative to the lens frame, to implement an outward expanded state of the smart glasses. The limiting component may be any component or component combination that can implement a limiting function, for example, may include but is not limited to a limiting hole, a limiting sliding groove, a spiral limiting mechanism, a pin limiting mechanism, a spring limiting mechanism, a hydraulic limiting device, and a photoelectric limiting device.

In a further possible design, the limiting component is a limiting hole, the support part passes through the limiting hole, one end of the support part is connected to the second end of the coil spring, and the other end of the support part is connected to the folding adjustment part, so that the support part is limited to rotate within a range of the limiting hole.

In a further possible design, under an action of the limiting component and the folding adjustment part, the smart glasses may be in any one of the following states: When the support part is located at a first edge of the limiting component, and the folding adjustment part is in a folded state, the smart glasses are in a folded state; when the support part is located at the first edge of the limiting component, and the folding adjustment part is in an unfolded state, the smart glasses are in an unfolded state; and when the support part is located at a second edge of the limiting component or between the first edge and the second edge, the smart glasses are in an outward expanded state.

In the foregoing design, the coil spring disposed inside the lens frame and the folding adjustment part disposed outside the lens frame are used, so that the smart glasses can implement three states: folded, unfolded, and outward expanded. The folded state and the unfolded state are implemented by the folding adjustment part, and the coil spring is not involved. Therefore, deformation amounts of the coil spring in the two states remain unchanged, or a deformation amount of the coil spring in a state between the two states remains unchanged, and the second working area of the coil spring is a point, where the point may correspond to a minimum deformation amount of the coil spring in the first working area. On the contrary, the outward expanded state is implemented by deformation of the coil spring. Because an elastic force of the coil spring in the entire first working area is basically constant, the smart glasses can provide a basically constant clamping force regardless of a position to which the smart glasses are expanded outward, so that the smart glasses can accommodate to users with various head widths, and can meet requirements of the users for wearing comfort and stability. Therefore, the smart glasses have good universality.

It may be understood that, in some other possible designs, when the smart glasses are in an unfolded state, the support part may alternatively be located between the first edge and the second edge of the limiting component, and the folding adjustment part is in an unfolded state. In other words, the unfolded state of the smart glasses is implemented by the coil spring and the folding adjustment part. In this case, the second working area of the coil spring is a deformation amount area, a start point of the deformation amount area corresponds to a deformation amount before a minimum deformation amount in the first working area, and a tail end of the deformation amount area corresponds to the minimum deformation amount in the first working area.

### Structure 2

In the structure 2, the coil spring adjustment part may further include a support part, and the support part is connected between the lens frame and the first end of the coil spring, and is configured to support the coil spring outside the lens frame.

In a possible design, the lens frame has a first hole, the support part passes through the first hole, a first end of the support part is fastened in the lens frame, and a second end of the support part is fastened to the first end of the coil spring.

According to this design, the first end of the coil spring can be fastened to the lens frame. In this case, the first end of the coil spring is configured as a fastening end, and the second end of the coil spring is displaced relative to the first end, to drive the frame temple body connected to the second end to rotate relative to the lens frame.

In a further possible design, the second end of the support part has a fastening shaft, a first groove is disposed on the fastening shaft, and the first end of the coil spring is embedded into the first groove.

In the foregoing design, the first end of the coil spring may be stuck by the first groove, to be fastened in the lens frame. In this fastening manner, preparation is convenient, and no additional fastener needs to be used. This helps reduce costs and structure complexity.

In a further possible design, the second end of the support part has a hollow accommodation cavity, and the coil spring and the fastening shaft are embedded into the accommodation cavity. In this way, impurities such as dust can be prevented from entering the cavity to corrode the coil spring and affecting performance of the coil spring.

In a possible design, there is a limiting component on the support part, and the limiting component is configured to limit a rotation range of the support part relative to the lens frame. The limiting component may be any component or component combination that can implement a limiting function, for example, may include but is not limited to a limiting hole, a limiting sliding groove, a spiral limiting mechanism, a pin limiting mechanism, a spring limiting mechanism, a hydraulic limiting device, and a photoelectric limiting device.

In a further possible design, the limiting component is a limiting hole, and the frame temple body passes through the limiting hole and is fastened to the second end of the coil spring.

According to this design, the frame temple body may be limited to rotate between two edges of the limiting hole, so that the frame temple body rotates in an area relative to the lens frame, to implement different states of the smart glasses.

In a further possible design, under an action of the limiting hole, the smart glasses may be in any one of the following states: When the frame temple body is located at a first edge of the limiting hole, the smart glasses are in a folded state; and when the frame temple body is located at a second edge of the limiting hole or between the first edge and the second edge, the smart glasses are in an outward expanded state.

In the foregoing design, the coil spring disposed outside the lens frame and the limiting hole configured to limit rotation of the frame temple body are used, so that the smart glasses can implement two states: folded and outward expanded. When the smart glasses are in a folded state, a deformation amount of the coil spring may be a deformation amount when the coil spring has no elasticity or has tiny elasticity. When the smart glasses are in the outward expanded state, a deformation amount of the coil spring may be any deformation amount in the first working area, for example, a minimum deformation amount, a maximum deformation amount, or a value between a minimum deformation amount and a maximum deformation amount. In addition, in the outward expanded state, because an elastic force of the coil spring in the entire first working area is basically constant, the smart glasses can provide a basically constant clamping force regardless of a position to which the smart glasses are expanded outward, so that the smart glasses can accommodate to users with various head widths, and meet requirements of the users for wearing comfort and stability. Therefore, the smart glasses have good universality.

### Structure 3

In the structure 3, the coil spring adjustment part may further include a support part, and the support part is connected between the lens frame and the first end of the coil spring, and is configured to support the coil spring outside the lens frame.

In a possible design, the coil spring adjustment part may further include a rotation part, the rotation part includes a rotating shaft, and a second end of the support part and the frame temple body are separately sleeved on the rotating shaft.

According to this design, the frame temple body may rotate around the rotating shaft relative to the support part, and because the support part is fastened to the lens frame, the frame temple body can rotate relative to the lens frame.

In a further possible design, there may be a limiting component on the rotation part, and the limiting component is configured to limit a rotation range of the frame temple body. The limiting component may be, for example, a limiting hole, a limiting sliding groove, a spiral limiting mechanism, a pin limiting mechanism, a spring limiting mechanism, a hydraulic limiting device, and a photoelectric limiting device.

In a further possible design, the limiting component includes a protrusion part, the protrusion part is disposed on the rotating shaft, the frame temple body further includes a cover plate, a sliding groove is disposed on the cover plate, the rotating shaft is covered below the cover plate, and the protrusion part is embedded into the sliding groove.

According to this design, in a rotation process of the frame temple body, the protrusion part on the rotating shaft moves in the sliding groove on the frame temple body, so that the frame temple body is restricted to rotate within a range blocked by two edges of the sliding groove, to implement folded and unfolded states of the smart glasses.

In a further possible design, the second end of the coil spring is fastened to the rotating shaft. The rotating shaft is a suspended shaft. To be specific, the rotating shaft is a free member and is not fastened to the lens frame or the support part, and the rotating shaft may also rotate. In this way, after the frame temple body is rotated to an unfolded state, the frame temple body may further continue to rotate to an outward expanded state under a rotation action of the rotating shaft, and the outward expanded state is provided by deformation of the coil spring.

In a further possible design, under an action of the protrusion part, the sliding groove, and the coil spring, the smart glasses may be in any one of the following states: When the protrusion part is located at a first edge of the sliding groove, the smart glasses are in a folded state; when the protrusion part is located at a second edge of the sliding groove and the coil spring is located at a first position, the smart glasses are in an unfolded state; and when the protrusion part is located at the second edge of the sliding groove and the coil spring is located at a second position, the smart glasses are in the outward expanded state. A diameter of the coil spring at the second position is less than a diameter of the coil spring at the first position.

In an example of the foregoing design, switching between the folded state and the unfolded state may be implemented by using the protrusion part and the sliding groove. The coil spring is not involved or is slightly deformed, and deformation amounts of the coil spring in the two states basically remain unchanged. In other words, the first position of the coil spring is an initial position of the coil spring. Therefore, the second working area of the coil spring may be considered as a point, and the point corresponds to a minimum deformation amount of the coil spring in the first working area.

In another example of the foregoing design, switching between the folded state and the unfolded state may also be implemented by the coil spring, the protrusion part, and the sliding groove. Deformation amounts of the coil spring in the two states are different. In other words, the first position of the coil spring is different from an initial position of the coil spring. Therefore, the second working area of the coil spring is a deformation amount area, a start point of the deformation amount area is the initial position of the coil spring, the initial position corresponds to a position of a deformation amount before the minimum deformation amount in the first working area, a tail end of the deformation amount area is the first position of the coil spring, and the first position corresponds to a position of the minimum deformation amount in the first working area.

In the foregoing design, the coil spring disposed outside the lens frame, the rotating shaft fastened to the coil spring, and the protrusion part and the sliding groove that are configured to limit rotation of the frame temple body are used, so that the smart glasses can implement three states: folded, unfolded, and outward expanded. The folded state and the unfolded state may be implemented by the protrusion part and the sliding groove, or may be implemented by the protrusion part, the sliding groove, and deformation of the coil spring. The outward expanded state may be implemented by deformation of the coil spring. Because an elastic force in the entire first working area corresponding to the coil spring in an outward expansion process is basically constant, the smart glasses can provide a basically constant clamping force regardless of a position to which the smart glasses are expanded outward, so that the smart glasses can accommodate to users with various head widths, and can meet requirements of the users for wearing comfort and stability. Therefore, the smart glasses have good universality.

Implementations of the foregoing designs and beneficial effect that can be achieved are specifically described in detail in the following embodiments.

### BRIEF DESCRIPTION OF DRAWINGS

FIG. 1a is an example of a diagram of a partial structure of smart glasses using a spring hinge;
FIG. 1b is an example of a curve diagram of an elastic force characteristic of a spring;
FIG. 2 is an example of a diagram of a structure of smart glasses according to this application;
FIG. 3a is an example of a diagram of a structure of a coil spring according to this application;
FIG. 3b is an example of a curve diagram of an elastic force characteristic of a coil spring according to this application;
FIG. 4 is an example of a diagram of a partial structure of smart glasses in an implementation solution 1;
FIG. 5 is an example of a diagram of different states of smart glasses in an implementation solution 1;
FIG. 6 is an example of a diagram of a partial cross-sectional structure of smart glasses in an implementation solution 1 in each state;
FIG. 7 is an example of a diagram of a partial structure of smart glasses in an implementation solution 2;
FIG. 8 is an example of a diagram of different states of smart glasses in an implementation solution 2;
FIG. 9 is an example of a diagram of a partial cross-sectional structure of smart glasses in an implementation solution 2 in each state;
FIG. 10 is an example of a diagram of a partial structure of smart glasses in an implementation solution 3; and
FIG. 11 is an example of a diagram of a partial cross-sectional structure of smart glasses in an implementation solution 3 in each state.

### DESCRIPTION OF EMBODIMENTS

To make the objectives, technical solutions, and advantages of this application clearer, the following further describes this application in detail with reference to accompanying drawings.

In recent years, electronic products in a form of glasses have developed rapidly. Many smart glasses, such as virtual reality (virtual reality, VR) glasses, augmented reality (augmented reality, AR) glasses, mixed reality (mixed reality, MR) glasses, Bluetooth glasses, and movie glasses, start to attract consumers' attention. Compared to common optical glasses, the smart glasses integrate an optical display module and another electronic component at a lens frame position. This significantly increases a weight of a lens frame part of the smart glasses. However, the increased weight leads to reduced wearing comfort of a user, and when the user wears the glasses, the glass may slide down, exert great pressure on the nose bridge, or the like. To resolve these wearing problems, the pressure needs to be distributed by clamping forces of the frame temples on the head of the user, to enhance wearing stability of the entire glasses.

As described in the background, existing smart glasses use a spring hinge to provide a clamping force on the head of the user. However, deformation of a spring complies with Hooke's law, that is, a deformation amount of the spring is in a linear relationship with a deformation force. Refer to FIG. 1b. When this type of smart glasses is used, users with different head widths usually experience different clamping forces on their heads when wearing same smart glasses. For example, when the smart glasses are worn by a user with a small head width, the smart glasses can ensure wearing comfort but provide a small clamping force, causing wearing instability. However, when the smart glasses are worn by a user with a large head width, the smart glasses can ensure wearing stability but provide an excessively large clamping force, and the user may find the glasses too tight and feel uncomfortable to wear. It can be learned that the frame temple in the existing smart glasses is poorly fitted to the head of the user, and cannot be compatible with users with different head widths.

In view of this, this application provides smart glasses, to provide an approximately constant clamping force for users with different head widths, so as to improve comfort and stability when the users wear the glasses, and improve user experience.

It should be noted that the smart glasses shown in this application may be used as an independent wearable device, have an independent operating system, and may complete functions such as a schedule reminder, navigation, calling, and video recording by receiving operation instructions of a user, or may be used to implement a near-eye display scenario, for example, display an image of a real environment and an image of a virtual object in a real-time superimposition manner. Certainly, the smart glasses may also be used as an interaction apparatus of an electronic device, and are configured to interact with the user and send interaction information to a host of the electronic device.

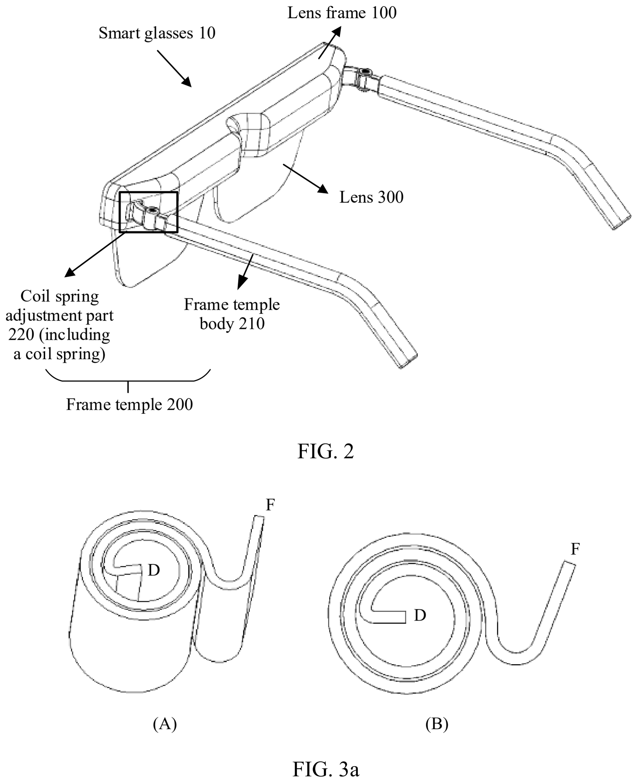

Based on the foregoing content, the following describes in detail the smart glasses provided in this application with reference to FIG. 2 to FIG. 11.

FIG. 2 is an example of a diagram of a structure of smart glasses according to this application. As shown in FIG. 2, smart glasses 10 include a lens frame 100 and frame temples 200, the frame temple 200 includes a frame temple body 210 and a coil spring adjustment part 220, the coil spring adjustment part 220 includes a coil spring (not shown in the figure), a first end of the coil spring is connected to the lens frame 100, and a second end of the coil spring is connected to the frame temple body 210.

Still refer to FIG. 2. The smart glasses 10 may further include lenses 300, and the lenses 300 are mounted on the lens frame 100. In the figure, an example in which the lenses 300 are mounted below the lens frame 100 is used. However, it should be understood that the lenses 300 may alternatively be mounted in any one or more directions of the lens frame 100, for example, may be surrounded by the lens frame 100. In some examples, the lens 300 may be a lens used to correct vision, for example, a concave lens or a convex lens, may be a lens used for sunblock or protection, for example, a planar lens, or may be a lens provided for the user to view a 3D image or a virtual image, for example, a display screen. The display screen may present an image such as a game picture, a movie picture, or a navigation map to the user.

The lens frame 100 may also be referred to as a middle frame or a lens support. In some scenarios, the lens frame 100 has enclosed space. The enclosed space may be used to place some electronic components related to functions of the smart glasses 10, such as a camera and a sensor, or may be used to place imaging-related optical components, such as a light source, a projector, and an optical lens, and certainly, may be used to place a circuit wiring.

It may be understood that one end of the frame temple body 210 is connected to the lens frame 100 through the coil spring adjustment part 220, to form a mechanical main structure of the smart glasses 10. When the smart glasses 10 are worn, frame temple bodies 210 are placed on human ears, so that the lenses 300 mounted on the lens frame 100 are located in front of the human eyes. Optionally, the frame temple body 210 may also have enclosed space, and the enclosed space is used to place some other electronic components related to functions of the smart glasses 10, for example, a circuit board, a battery, a speaker, and a microphone.

The coil spring adjustment part 220 includes the coil spring, and may further include another component. FIG. 3a is a diagram of a structure of a coil spring according to this application. (A) in FIG. 3a is a diagram of a three-dimensional structure of the coil spring, and (B) in FIG. 3a is a cross-sectional view of the coil spring. As shown in FIG. 3a, the coil spring is usually made by winding a stainless steel belt or another wide elastic material, and usually includes three or more coils. Three coils are used as an example in the figure. An end that is of the coil spring and that is located in the center of the coil spring is referred to as a first end D of the coil spring, and an end that is of the coil spring and that is located at an edge of the coil spring is referred to as a second end F of the coil spring. One of the first end D and the second end F is a fastening end, and the other is a free end. The fastening end is stationary relative to surrounding mechanical parts. When the coil spring is stretched, the free end is displaced relative to the fastening end, so that the coil spring is tightly wound, a diameter of the coil spring becomes smaller, and the coil spring generates a specific elastic force. When the coil spring rebounds, the free end is displaced relative to the fastening end, so that the coil spring is loosened, a diameter of the coil spring increases, and an elastic force of the coil spring decreases.

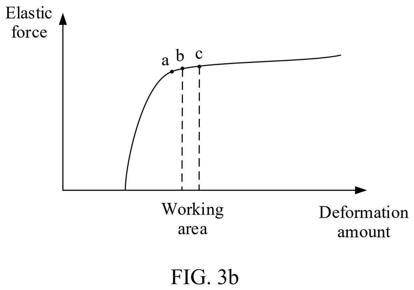

Further, the coil spring is an elastic mechanism that can generate a stable elastic force. For example, FIG. 3b is a curve diagram of an elastic force characteristic of the coil spring in this application. A horizontal axis of the curve diagram is a deformation amount of the coil spring, and a vertical axis of the curve diagram is an elastic force generated by the coil spring. As shown in FIG. 3b, in the initial phase of deformation of the coil spring, when a deformation amount is small, an elastic force generated by the coil spring rapidly increases as the deformation amount increases (referred to as a rapid growth period); and when the deformation amount reaches a value (referred to as a sudden change state point, for example, a state point a shown in the figure), as the deformation continues to increase, the elastic force generated by the coil spring basically tends to be constant (referred to as a stable period).

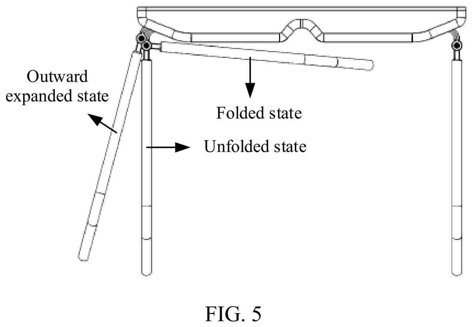

Based on the foregoing elastic force characteristic of the coil spring, to enable the smart glasses 10 to generate an almost constant clamping force when the smart glasses 10 are worn, a deformation amount range of the coil spring in an outward expansion process of the frame temple body 210 may be configured as a deformation amount range in the stable period, for example, an initial state of the coil spring in the outward expansion process of the frame temple body 210 is configured as a state point right after the sudden change state point a, for example, a state point b shown in the figure. In addition, a maximum deformation state of the coil spring when the frame temple body 210 is expanded outward is configured as a state point after the state point b, for example, a state point c shown in the figure. In this way, in the entire outward expansion process of the frame temple body 210 (from unfolding the frame temple body 210 to expanding the frame temple body 210 outward to a maximum angle, where the maximum angle usually does not exceed 30°, and for details, refer to FIG. 5 below), a deformation amount of the coil spring is in a deformation amount area between the state point b and the state point c shown in the figure. The deformation amount area is referred to as a working area (referred to as a first working area for short) of the coil spring in an outward expanded state, and a length variation of the coil spring in the first working area is far less than an overall length of the coil spring. In this way, in a process from unfolding the smart glasses 10 to being worn on the head of the user, although a deformation amount of the coil spring changes, an elastic force provided by the coil spring basically remains unchanged. Therefore, a clamping force provided by the smart glasses 10 for the head of the user basically remains unchanged.

Further, for example, to ensure that the clamping force provided when the smart glasses 10 are worn maintains wearing comfort and stability of the user, a target clamping force that can meet two requirements of wearing comfort and wearing stability may be further determined in advance through an experiment or experience. Then, a structure of the coil spring, for example, a thickness and a shape of the coil spring, is designed with reference to the target clamping force, so that in a curve diagram of an elastic force characteristic corresponding to the designed coil spring, a stable elastic force after the sudden change state point a is exactly equal to or approximately equal to the target clamping force. In this way, the clamping force provided by the coil spring in a process of wearing the smart glasses can be compatible with users with different head widths, that is, can clamp the head of the user, and is not excessively tight, thereby effectively improving wearing experience of the user.

In addition, it should be noted that, in addition to the outward expanded state, the frame temple body 210 further has another state, for example, a folded state or an unfolded state (for details, refer to FIG. 5 below). In this application, only the first working area of the coil spring in the outward expanded state of the frame temple body 210 is limited, and a second working area of the coil spring in a non-outward expanded state of the frame temple body 210 is not limited. For example, the second working area of the coil spring may be configured as a point. In other words, in an entire process from folding to unfolding of the frame temple body 210, a deformation amount of the coil spring remains unchanged, and the deformation amount may be configured as, for example, a minimum deformation amount in the first working area. Alternatively, the second working area of the coil spring may be configured to include a deformation amount area in the rapid rising period. In this case, an elastic force provided by the coil spring in a non-outward expansion process is different from an elastic force provided by the coil spring in an outward expansion process. Alternatively, the second working area of the coil spring may be configured as an area between an end of the rapid rising period and the first working area. In this case, an elastic force provided by the coil spring in a non-outward expansion process is basically the same as an elastic force provided by the coil spring in an outward expansion process. Examples are not enumerated herein.

Based on the foregoing description content, the following describes in detail a specific structure of the smart glasses. It may be understood that there are generally two frame temples 200. Therefore, there are also two frame temple bodies 210 and two coil spring adjustment parts 220. The following uses an example in which one coil spring adjustment part 220 is connected to one frame temple body 210 and the lens frame 100 for description.

### Implementation solution 1

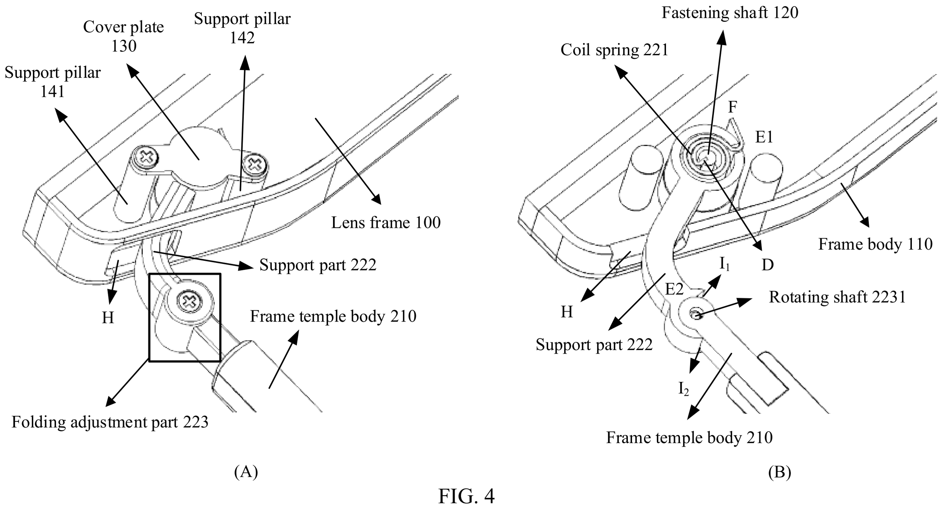

FIG. 4 is an example of a diagram of a partial structure of smart glasses in an implementation solution 1. (A) in FIG. 4 is a partial structure of the smart glasses seen from a position of a frame temple after an innermost (that is, a side close to eyes of a user) layer of housing of the lens frame 100 is removed, and (B) in FIG. 4 is a cross-sectional structure obtained by cutting the part shown in (A) in FIG. 4 along a central position of a lens frame in a plane parallel to lenses. The following describes in detail components that may be included in the smart glasses 10 with reference to (A) in FIG. 4 and (B) in FIG. 4.

First, refer to (B) in FIG. 4. A coil spring adjustment part 220 may include a coil spring 221 and a support part 222, and the support part 222 is connected between a second end (an end F shown in the figure) of the coil spring 221 and a frame temple body 210. For example, a first end (an end E1 shown in the figure) of the support part 222 is fastened to the end F of the coil spring, and a second end (an end E2 shown in the figure) of the support part 222 is fastened to or rotatably connected to the frame temple body 210. The end F of the coil spring may be considered as a free end. When the end F of the coil spring rotates relative to a fastening end (an end D shown in the figure) of the coil spring, the support part 222 fastened to the end F of the coil spring is synchronously driven to rotate, to further drive the frame temple body 210 connected to the end E2 of the support part 222 to rotate. This implements outward expansion of the frame temple body 210 relative to the lens frame 100.

In an example, referring to (A) in FIG. 4 or (B) in FIG. 4, the lens frame 100 may further have a limiting component H, and the limiting component H is configured to limit a rotation range of the support part 222. It should be noted that, in the figure, an example in which the limiting component H is a limiting hole is used. The support part 222 passes through the limiting hole H, one end of the support part 222 is connected to the end F of the coil spring 221, and the other end of the support part 222 is connected to the frame temple body 210, so that the support part 222 can be limited to rotate between two edges of the limiting hole H, to further drive the frame temple body 210 to expand outward in a small area relative to the lens frame 100. When the frame temple body 210 is expanded outward in the area, a deformation amount area of the coil spring 221 corresponds to the first working area of the coil spring 221. It should be understood that the limiting component may alternatively be another component or assembly that can implement a limiting function, for example, a limiting hole, a limiting sliding groove, a spiral limiting mechanism, a pin limiting mechanism, a spring limiting mechanism, a hydraulic limiting device, and a photoelectric limiting device. This is not specifically limited.

In an example, referring to (A) in FIG. 4, the coil spring adjustment part 220 may further include a folding adjustment part 223, and the folding adjustment part 223 is connected between the support part 222 and the frame temple body 210, and is configured to fold or unfold the frame temple body 210 relative to the support part 222, so that the frame temple body 210 is folded or unfolded relative to the lens frame 100.

It may be understood that the folding adjustment part 223 may be any component or assembly that can implement a folding function, for example, may be a folding hinge. Specifically, referring to (B) in FIG. 4, the folding adjustment part 223 may include a rotating shaft 2231, the end E2 of the support part 222 further has a limiting groove, the rotating shaft 2231 is disposed in the limiting groove and is fastened to the end E2 of the support part 222, and the frame temple body 210 is sleeved on the rotating shaft 2231, and may be connected to the rotating shaft 2231 in a manner such as screw locking (not shown in the figure). In this way, when the smart glasses 10 are switched to the folded state, the frame temple body 210 may be pushed in a counterclockwise direction shown in the figure, so that the frame temple body 210 rotates in a counterclockwise direction around the rotating shaft 2231 to an edge I₁ that is shown in the figure and that is of the limiting groove. In this way, the frame temple body 210 is folded below the lens frame 100. On the contrary, when the smart glasses 10 are switched to the unfolded state, the frame temple body 210 may be pushed in a clockwise direction shown in the figure in a folded state, so that the frame temple body 210 rotates in a clockwise direction around the rotating shaft 2231 to an edge I₂ that is shown in the figure and that is of the limiting groove. In this way, the frame temple body 210 is unfolded relative to the lens frame 100, and is fastened at an unfolded position under an action of a rebound force provided by screw locking.

In an example, referring to (A) in FIG. 4 and (B) in FIG. 4, the first end (the end D shown in the figure) of the coil spring may be fastened to the lens frame 100, and specifically, may be fastened in the lens frame 100. For example, the lens frame 100 includes a frame body 110, and the end D of the coil spring 221 is fastened in the frame body 110 through, for example, welding, pasting, riveting, or threaded fitting.

Optionally, in a specific fastening manner, still referring to (B) in FIG. 4, there is a fastening shaft 120 in the frame body 110, a first groove is disposed on the fastening shaft 120, and the end D of the coil spring 221 is embedded into the first groove, to be stuck by the first groove, so as to be fastened in the frame body 110. Fastening is performed in a grooving and clamping manner, so that preparation is convenient, and no additional fastener needs to be used. This helps reduce costs and structure complexity.

In a further example, still referring to (B) in FIG. 4, the end E1 of the support part 222 may further have a hollow accommodation cavity, and the coil spring 221 and the fastening shaft 120 are embedded into the accommodation cavity, so that impurities such as dust can be prevented from entering the cavity to corrode the coil spring 221 and affecting performance of the coil spring 221.

Optionally, to ensure integrity of a structure of the accommodation cavity, referring to (A) in FIG. 4, the frame body 110 may further have a cover plate 130, and the cover plate 130 covers the accommodation cavity, to wrap the coil spring 221 and the fastening shaft 120 inside.

In addition, to maintain stability of the cover plate 130 on the accommodation cavity and avoid movement, the cover plate 130 may be further fastened to the frame body 110. For example, still referring to (A) in FIG. 4, there is at least one support pillar in the frame body 110, and the at least one support pillar is separately screwed to the cover plate 130 through a screw, to fasten the cover plate 130 to the frame body 110. It should be understood that FIG. 4 is described by using an example in which two support pillars 141 and 142 fasten the cover plate through threads. However, in practice, one or more support pillars may be disposed, and the support pillars may be fastened to the cover plate in another manner. This is not specifically limited.

In an example, the end F of the coil spring may be fastened to the end E1 of the support part 222 through welding, pasting, riveting, thread fitting, or the like. For example, in a specific fastening manner, still referring to (B) in FIG. 4, the end E1 of the support part 222 has a hollow accommodation cavity, a housing of the accommodation cavity has a first opening, and the end F of the coil spring 221 is bent and embedded into the first opening, to be clamped on the housing of the accommodation cavity.

The foregoing content describes a possible structure of the smart glasses 10. The following describes possible states of the smart glasses 10.

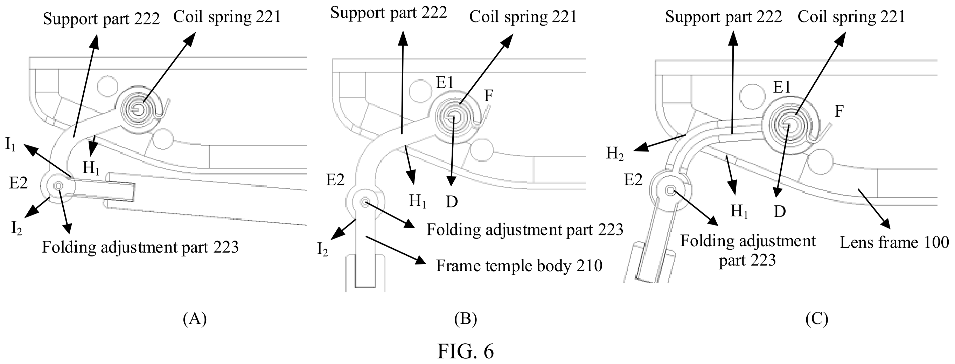

The smart glasses in the implementation solution 1 may implement three states: a folded state, an unfolded state, and an outward expanded state, as shown in FIG. 5. Further, FIG. 6 is a diagram of a partial cross-sectional structure of the smart glasses in each state. For example, (A) in FIG. 6 is a partial cross-sectional structure of the smart glasses in a folded state, (B) in FIG. 6 is a partial cross-sectional structure of the smart glasses in an unfolded state, and (C) in FIG. 6 is a diagram of a partial cross-sectional structure of the smart glasses in the outward expanded state.

First, refer to (A) in FIG. 6. When the support part 222 is located at a first edge H₁ of the limiting component, and the folding adjustment part 223 is in a folded state, the smart glasses 10 are in a folded state.

Second, refer to (B) in FIG. 6. When the support part 222 is located at the first edge H₁ of the limiting component, and the folding adjustment part 223 is in an unfolded state, the smart glasses 10 are in an unfolded state. For example, in a folded state shown in (A) in FIG. 6, the frame temple body 210 is pushed in a clockwise direction shown in the figure, so that the frame temple body 210 rotates around the support part 222 from an edge I₁ shown in the figure to an edge I₂ that is shown in the figure and that is of the limiting groove at the end E2 of the support part 222, to unfold the frame temple body 210, and switch the smart glasses 10 from the folded state to the unfolded state. In this case, the frame temple body 210 is at a minimum outward expansion position.

It should be noted that, according to position limitation manners shown in (A) in FIG. 6 and (B) in FIG. 6, a process in which the frame temple body 210 is rotated from the folded state to the unfolded state or rotated from the unfolded state to the folded state is completely implemented by using the folding adjustment part 223, and the coil spring 221 is not involved. In this case, in a process in which the frame temple body 210 rotates from the folded state to the unfolded state, the support part 222 is always located at the first edge H₁ of the limiting component, and the support part 222 does not rotate. Therefore, a deformation amount of the coil spring 221 remains unchanged, a second working area of the coil spring 221 remains as a point, and the point corresponds to a minimum deformation amount of the coil spring in the first working area, that is, a deformation amount corresponding to the state point b shown in FIG. 3b.

It may be understood that state switching manners shown in (A) in FIG. 6 and (B) in FIG. 6 are merely possible examples. In another example, the coil spring 221 and the folding adjustment part 223 may be used together to implement switching between the folded state and the unfolded state. For example, in a process of unfolding the frame temple body through the folding adjustment part 223, deformation of the coil spring 221 is simultaneously used to drive the frame temple body 210 to be further unfolded, bringing the smart glasses 10 into the unfolded state. In this case, the support part 222 is located at a position between the first edge H₁ and a second edge H₂ of the limiting component, and the folding adjustment part 223 is in an unfolded state. In this case, because the coil spring 221 also has a small deformation amount in a process of unfolding the smart glasses 10, the second working area of the coil spring 221 remains as a deformation amount area, a start point of the deformation amount area corresponds to a deformation amount before the deformation amount corresponding to the state point b shown in FIG. 3b, and a tail end of the deformation amount area corresponds to the deformation amount corresponding to the state point b shown in FIG. 3b. When the deformation amount area is in a stable period, an elastic force provided by the coil spring 221 in the second working area is basically the same as an elastic force provided by the coil spring 221 in an outward expansion process. When the deformation amount area is in a rapid rising period, an elastic force provided by the coil spring 221 in the second working area is different from the elastic force provided by the coil spring 221 in the outward expansion process.

In addition, refer to (C) in FIG. 6. When the support part 222 is located at the second edge H₂ of the limiting component or at a position between the first edge H₁ and the second edge H₂ (the figure shows that the support part 222 is located at the second edge H₂), and the folding adjustment part 223 is in an unfolded state, the smart glasses 10 are in the outward expanded state. For example, in an unfolded state shown in (B) in FIG. 6, if a diameter of a head of a user is greater than a distance between two frame temples in an unfolded state, when the smart glasses 10 are worn on the head of the user, resistance of the head of the user to the frame temple body 210 causes the frame temple body 210 to continue to rotate in a clockwise direction shown in the figure. However, in this case, the frame temple body 210 is already at the edge I₂ that is shown in the figure and that is of the limiting groove, and the frame temple body 210 cannot rotate along the support part 222. Therefore, the frame temple body 210 drives the support part 222 to rotate in a clockwise direction together, to further drive the end F that is of the coil spring 221 and that is fastened to the end E1 of the support part 222 to rotate in a clockwise direction. Because the end D of the coil spring 221 is fastened to the lens frame 100, rotation of the end F enables the coil spring 221 to be tightly rolled, a diameter of the coil spring 221 decreases, and a spacing between any two adjacent coils in the coil spring 221 decreases. In this case, to overcome this trend of tightening, the coil spring 221 generates an opposite elastic force, that is, a clamping force.

In addition, as an outward expansion angle increases, although the clamping force generated by the coil spring 221 also increases, as described in the foregoing description of the first working area in FIG. 3b that an elastic force generated by the coil spring 221 between the minimum outward expansion position (the support part 222 is located at the first edge H₁ of the limiting component, and a deformation amount of the coil spring 221 is the deformation amount corresponding to the state point b shown in FIG. 3b) and a maximum outward expansion position (the support part 222 is located at the second edge H₂ of the limiting component, and a deformation amount of the coil spring 221 is a deformation amount corresponding to the state point c shown in FIG. 3b) is basically constant, the clamping force of the smart glasses 10 on the head is basically constant. In this way, when users with different head widths wear the smart glasses 10, the users have a same clamping force experience. A user with a larger head width does not experience head clamping, and a user with a smaller head width does not find it unstable to wear. This helps improve wearing comfort and wearing stability.

According to the structure of the smart glasses in the foregoing implementation solution 1, the three states, that is, folded, unfolded, and outward expanded, may be implemented by using the coil spring disposed inside the lens frame and the folding adjustment part disposed outside the lens frame. When the user does not wear the smart glasses, the smart glasses may be folded and stored by using the folding adjustment part. When the user wears the smart glasses, the smart glasses may be unfolded by using the folding adjustment part, and the frame temples are expanded outward by using the coil spring to match a head width. In addition, in the outward expanded state, the smart glasses can provide a basically constant clamping force regardless of a position to which the smart glasses are expanded outward, so that the smart glasses can accommodate to users with various head widths, and can meet requirements of the users for wearing comfort and stability. Therefore, the smart glasses have good universality.

### Implementation solution 2

In comparison with the structure of the smart glasses in the foregoing implementation solution 1, in the implementation solution 2, the smart glasses are simplified, the folding adjustment part in the implementation solution 1 is omitted, only assemblies related to the coil spring are retained, and the coil spring is externally disposed. In this way, both a folded state and an outward expanded state of the smart glasses are provided by using the coil spring. The following describes in detail a specific structure of the smart glasses in the implementation solution 2.

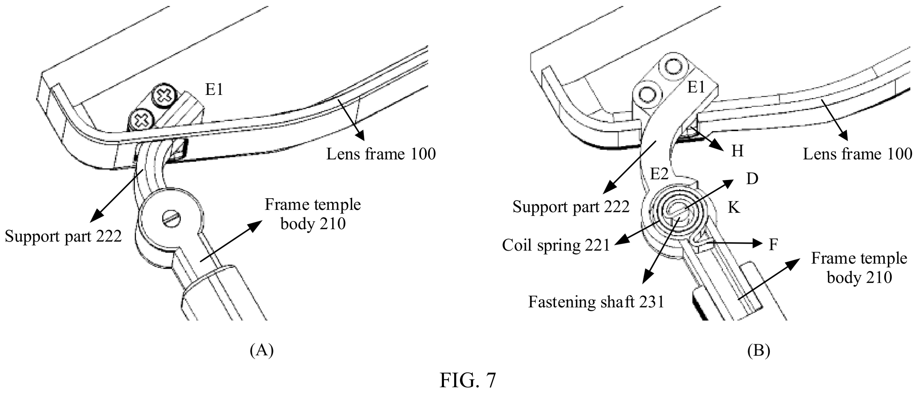

FIG. 7 is an example of a diagram of a partial structure of smart glasses in the implementation solution 2. (A) in FIG. 7 is a partial structure of the smart glasses seen from a position of a frame temple after an innermost (that is, a side close to eyes of a user) layer of housing of a lens frame 100 is removed, and (B) in FIG. 7 is a cross-sectional structure obtained by cutting the part shown in (A) in FIG. 7 along a central position of a lens frame in a plane parallel to lenses. The following describes in detail components that may be included in the smart glasses 10 with reference to (A) in FIG. 7 and (B) in FIG. 7.

First, refer to (B) in FIG. 7. A coil spring adjustment part 220 may include a coil spring 221 and a support part 222, and the support part 222 is connected between a lens frame 100 and a first end (an end D shown in the figure) of the coil spring 221, and is configured to support the coil spring 221 outside the lens frame 100. The end D of the coil spring 221 may be considered as a fastening end, and a free end (an end F shown in the figure) of the coil spring 221 is connected to a frame temple body 210. When the end F of the coil spring 221 rotates relative to the end D, the frame temple body 210 connected to the end F of the coil spring 221 is synchronously driven to rotate, to implement rotation of the frame temple body 210 relative to the lens frame 100.

In an example, still referring to (B) in FIG. 7, the lens frame 100 has a first hole H, the support part 222 passes through the first hole H, a first end (an end E1 shown in the figure) of the support part 222 is fastened in the lens frame 100, and a second end (an end E2 shown in the figure) of the support part 222 is fastened to the end D of the coil spring 221, so that the end D of the coil spring 221 can be fastened to the lens frame 100.

It may be understood that, in FIG. 7, an example in which the end E1 of the support part 222 is fastened to the lens frame 100 through a bolt is used. However, in practice, in the smart glasses 10, the end E1 of the support part 222 may also be fastened to the lens frame 100 in any one or more manners of welding, nail pulling, magnetic suction, pasting, clamping, suspension, locking, riveting, buckling, and the like. This is not specifically limited.

In a further example, the end E2 of the support part 222 may also be fastened to the end D of the coil spring 221 in any one of the foregoing fastening manners. For example, in a specific fastening manner, still referring to (B) in FIG. 7, the end E2 of the support part 222 has a fastening shaft 231, a first groove is disposed on the fastening shaft 231, and the end D of the coil spring 221 is embedded into the first groove, to be stuck by the first groove, so as to be fastened to the end E2 of the support part 222. Fastening is performed in a grooving and clamping manner, so that preparation is convenient, and no additional fastener needs to be used. This helps reduce costs and structure complexity.

In a further example, still referring to (B) in FIG. 7, the end E2 of the support part 222 may further have a hollow accommodation cavity, and the coil spring 221 and the fastening shaft 231 are embedded into the accommodation cavity, so that impurities such as dust can be prevented from entering the cavity to corrode the coil spring 221 and affecting performance of the coil spring 221.

Optionally, to ensure integrity of a structure of the accommodation cavity, referring to (A) in FIG. 7, the accommodation cavity may be further sealed by a housing on the frame temple body 210 and a housing of the support part 222, to wrap the coil spring 221 and the fastening shaft 231 inside.

In an example, the end E2 of the support part 222 may further have a limiting component, and the limiting component is configured to limit a rotation range of the frame temple body 210 relative to the support part 222. The limiting component may be any component or component combination that can implement a limiting function, for example, may include but is not limited to a limiting hole, a limiting sliding groove, a spiral limiting mechanism, a pin limiting mechanism, a spring limiting mechanism, a hydraulic limiting device, and a photoelectric limiting device.

In a further example, an example in which the limiting component is a limiting hole is used. Still refer to (B) in FIG. 7. The end E2 of the support part 222 has a limiting hole K (an example in which the limiting hole K is disposed on the housing of the accommodation cavity is used in the figure), and the frame temple body 210 passes through the limiting hole K, and is fastened to the end F of the coil spring 221. In this way, the frame temple body 210 may be limited to rotate between two edges of the limiting hole K.

The foregoing content describes a possible structure of the smart glasses 10. The following describes possible states of the smart glasses 10.

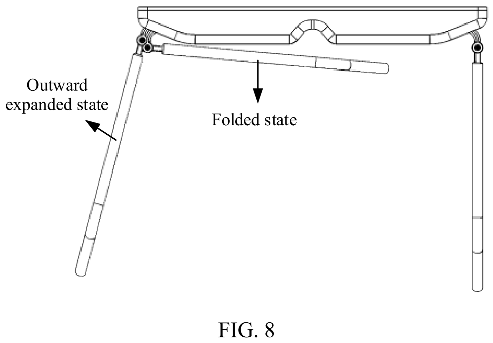

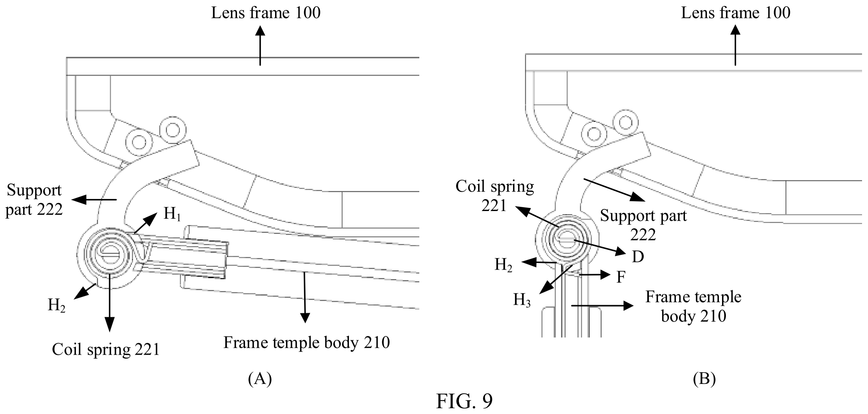

The smart glasses in the implementation solution 2 may implement two states: a folded state and an outward expanded state, as shown in FIG. 8. Further, FIG. 9 is a diagram of a partial cross-sectional structure of the smart glasses in each state. For example, (A) in FIG. 9 is a partial cross-sectional structure of the smart glasses in a folded state, and (B) in FIG. 9 is a partial cross-sectional structure of the smart glasses in the outward expanded state.

First, refer to (A) in FIG. 9. When the frame temple body 210 is located at a first edge H₁ of the limiting hole, the smart glasses 10 are in a folded state. In a folded state, the coil spring 221 is not deformed or has a small deformation amount.

Second, refer to (B) in FIG. 9. When the frame temple body 210 is located at a second edge H₂ of the limiting hole or at a position between the first edge H₁ and the second edge H₂ (the figure shows that the frame temple body 210 is located at the second edge H₂ of the limiting hole), the smart glasses 10 are in the outward expanded state. For example, in a process in which the smart glasses 10 are worn on a head of a user in a folded state shown in (A) in FIG. 9, the frame temple body 210 rotates in the limiting hole in a clockwise direction shown in the figure, to drive the end F that is of the coil spring 221 and that is fastened to the frame temple body 210 to rotate together until frame temple bodies 210 are clamped on two sides of the head of the user. Because the end D of the coil spring 221 is fastened to the lens frame 100, rotation of the end F enables the coil spring 221 to be tightly rolled, a diameter of the coil spring 221 decreases, and a spacing between any two adjacent coils in the coil spring 221 decreases. In this case, to overcome this trend of tightening, the coil spring 221 generates an opposite elastic force, that is, a clamping force. In addition, after the user finishes wearing the smart glasses 10 and takes off the smart glasses 10, the frame temple body 210 automatically rebounds to the folded state shown in (A) in FIG. 9 under the elastic force of the coil spring.

It should be noted that a wearing process of the smart glasses 10 in the implementation solution 2 may include two phases:
Phase 1: The user unfolds the frame temple body 210 from the folded state shown in (A) in FIG. 9. In this process, the frame temple body 210 rotates in a clockwise direction in the limiting hole under an action of a manual force of the user, and it is assumed that the frame temple body 210 rotates to a position H₃ that is of the limiting hole and that is shown in (B) in FIG. 9. The position H₃ may be designed based on head widths of a customer group of the smart glasses 10, for example, may be configured as a position of the frame temple body 210 after a user with a minimum head width wears the smart glasses 10.
Phase 2: The user wears, to the head, the smart glasses 10 that are manually unfolded. In this process, the frame temple body 210 stops at the position H₃ under an action of head resistance, or continues to rotate in a clockwise direction until the frame temple body 210 rotates to a position that adapts to a head width of the user.

The phase 2 corresponds to a first working area of the coil spring 221. The first working area may be designed with reference to the manner shown in FIG. 3b. For example, a deformation amount of the coil spring 221 when the frame temple body 210 is at the minimum outward expansion position H₃ is configured as the deformation amount corresponding to the state point b shown in FIG. 3b, and a deformation amount of the coil spring 221 when the frame temple body 210 is at a maximum outward expansion position H₂ is the deformation amount corresponding to the state point c shown in FIG. 3b. In this way, for users with different head widths, although the frame temple body 210 finally stops at different positions, a rotation range of the frame temple body 210 between the minimum outward expansion position H₃ and the maximum outward expansion position H₂ is designed in advance to exactly correspond to a deformation amount area of the coil spring 221 between the state point b and the state point c shown in FIG. 3b, so that an elastic force generated by the coil spring 221 in a rotation process of the frame temple body 210 can be basically constant. In this way, a clamping force of the smart glasses 10 on heads of the users with different head widths is basically constant.

In addition, the phase 1 corresponds to a second working area of the coil spring 221, and the second working area may be configured in a plurality of cases. Examples are provided.

In a possible design, the second working area may be configured as an area between the sudden change state point a shown in FIG. 3b or a state point after the sudden change state point a and the state point b. In this case, the second working area is in a stable period, and in a process in which the frame temple body 210 switches from the folded state to the unfolded state, although a deformation amount of the coil spring 221 changes, an elastic force provided by the coil spring 221 basically remains unchanged, and the elastic force is approximately equal to an elastic force provided by the coil spring 221 in the outward expanded state.

In another possible design, the second working area may be configured as an area between a state point before the sudden change state point a and the state point b shown in FIG. 3b. In this case, the second working area spans from a rapid growth period to the stable period, and in a process in which the frame temple body 210 switches from the folded state to the unfolded state, a deformation amount of the coil spring 221 changes, an elastic force provided by the coil spring 221 also changes, and the elastic force provided by the coil spring 221 gradually increases from an elastic force less than a constant elastic force corresponding to the first working area to the constant elastic force corresponding to the first working area. For example, it is assumed that the second working area is configured as a range from no deformation or slight deformation to the deformation amount corresponding to the state point b shown in FIG. 3b. In a process in which the frame temple body 210 switches from the folded state to the unfolded state, the elastic force provided by the coil spring 221 gradually increases from 0 to the constant elastic force corresponding to the first working area.

According to the structure of the smart glasses in the foregoing implementation solution 2, the two states, that is, folded and outward expanded, may be implemented by using the coil spring and the limiting component that are disposed outside the lens frame. In addition, in the outward expanded state, the smart glasses can provide a basically constant clamping force regardless of a position to which the smart glasses are expanded outward, so that the smart glasses can accommodate to users with various head widths, and can meet requirements of the users for wearing comfort and stability. Therefore, the smart glasses have good universality.

### Implementation solution 3

Compared with the structure of the smart glasses in the foregoing implementation solution 2, in the implementation solution 3, a rotation part that can implement an unfolded state is added to the smart glasses, and the rotation part is fitted and fastened to one end of a coil spring. In addition, a groove of a special shape is provided on a part that fits the rotation part, so that the smart glasses can implement three states: folded, unfolded, and outward expanded. The following describes in detail a specific structure of the smart glasses in the implementation solution 3.

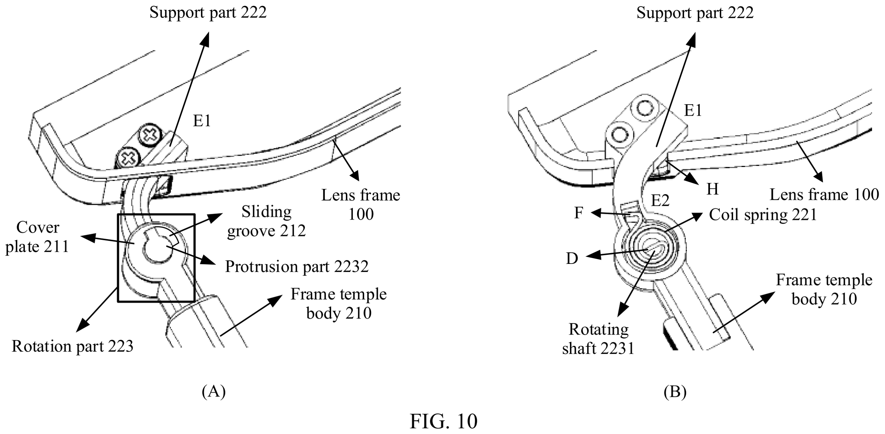

FIG. 10 is an example of a diagram of a partial structure of smart glasses in the implementation solution 3. (A) in FIG. 10 is a partial structure of the smart glasses seen from a position of a frame temple after an innermost (that is, a side close to eyes of a user) layer of housing of a lens frame 100 is removed, and (B) in FIG. 10 is a cross-sectional structure obtained by cutting the part shown in (A) in FIG. 10 along a central position of a lens frame in a plane parallel to lenses. The following describes in detail components that may be included in the smart glasses 10 with reference to (A) in FIG. 10 and (B) FIG. 10.

First, refer to (B) in FIG. 10. A coil spring adjustment part 220 may include a coil spring 221 and a support part 222, and the support part 222 is connected between a lens frame 100 and a first end (an end F shown in the figure) of the coil spring 221. For example, the lens frame 100 has a first hole H, the support part 222 passes through the first hole H, a first end (an end E1 shown in the figure) of the support part 222 is fastened to the lens frame 100, and a second end (an end E2 shown in the figure) of the support part 222 is fastened to the end F of the coil spring 221, to support the coil spring 221 outside the lens frame 100.

It should be noted that, in FIG. 10, an example in which the end E1 of the support part 222 is fastened to the lens frame 100 through a screw, and the end F of the coil spring 221 is fastened to the end E2 of the support part 222 in a pasting manner is used. However, it should be understood that, in practice, the smart glasses 10 may also be fastened in another manner. For example, a groove may be provided at the end E2 of the support part 222, and the end F of the coil spring 221 is embedded into the groove, to fasten the end F of the coil spring 221 to the end E2 of the support part 222. This is not specifically limited.

In an example, referring to (A) in FIG. 10 and (B) in FIG. 10, the coil spring adjustment part 220 may further include a rotation part 223, the rotation part 223 includes a rotating shaft 2231, and the end E2 of the support part 222 and the frame temple body 210 are separately sleeved on the rotating shaft 2231. According to this design, the frame temple body 210 may rotate around the rotating shaft 2231 relative to the support part 222, to implement rotation of the frame temple body 210 relative to the lens frame 100.

It should be noted that the rotating shaft 2231 may be understood as a suspended shaft. In other words, the rotating shaft 2231 is a free member and is not fastened to the lens frame 100 or the support part 222, and the rotating shaft 2231 may also rotate.

In a further example, there may be a limiting component on the rotation part 223, and the limiting component is configured to limit a rotation range of the frame temple body 210 around the rotating shaft 2231. The limiting component may be, for example, a limiting hole, a limiting sliding groove, a spiral limiting mechanism, a pin limiting mechanism, a spring limiting mechanism, a hydraulic limiting device, and a photoelectric limiting device.

In a specific design of the limiting component, referring to (A) in FIG. 10 and (B) in FIG. 10, the rotating shaft 2231 has a protrusion part 2232, the frame temple body 210 includes a cover plate 211, a sliding groove 212 is disposed on the cover plate 211, the rotating shaft 2231 is covered below the cover plate 211, and the protrusion part 2232 is embedded into the sliding groove 212. In this way, as the frame temple body 210 rotates, the sliding groove 212 on the frame temple body 210 may be blocked at an edge by the protrusion part 2232, to restrict rotation of the frame temple body 210 within an area blocked by two edges of the sliding groove 212. The rotation range corresponds to a state between the folded state and the unfolded state of the smart glasses 10. For example, when a right edge that is shown in the figure and that is of the sliding groove 212 is stuck by the protrusion part 2232, the frame temple body 210 is folded below the lens frame 100, and the smart glasses 10 are in a folded state. When the frame temple body 210 rotates in a clockwise direction in a folded state as shown in the figure, the sliding groove 212 on the frame temple body 210 slides clockwise along the protrusion part 2232, and when the sliding groove 212 slides to an upper edge of the sliding groove 212 shown in the figure and is stuck by the protrusion part 2232, the frame temple body 210 is unfolded, and the smart glasses 10 are in an unfolded state. It may be understood that, in a process in which the smart glasses 10 changes from the folded state to the unfolded state, a position of the protrusion part 2232 may always remain unchanged, and the smart glasses 10 switches between the two states by sliding the sliding groove 212 along the protrusion part 2232.

In a further example, to enable the smart glasses 10 to further have an outward expanded state, still referring to (B) in FIG. 10, the end D of the coil spring 221 is fastened to the rotating shaft 2231. The end D of the coil spring may be considered as a free end. In this way, in a process in which the frame temple body 210 rotates in a clockwise direction as shown in the figure, even if the sliding groove 212 on the frame temple body 210 is stuck on the upper edge by the protrusion part 2232, the frame temple body 210 cannot further rotate around the rotating shaft 2231. However, because the rotating shaft 2231 is a suspended shaft, the frame temple body 210 may drive the stuck protrusion part 2232 to rotate in a clockwise direction together, to further drive the rotating shaft 2231 on which the protrusion part 2232 is located to rotate together, and drive the end D that is of the coil spring 221 and that is fastened to the rotating shaft 2231 to rotate, so that the frame temple body 210 is expanded outward relative to the lens frame 100 through displacement of the end D of the coil spring 221 relative to the end F.

In a further example, the end D of the coil spring 221 may be fastened to the rotating shaft 2231 in any one or more manners of welding, pasting, nail pulling, magnetic suction, clamping, suspension, locking, riveting, buckling, and the like. For example, in a specific fastening manner, still referring to (B) in FIG. 10, a first groove is disposed on the rotating shaft 2231, and the end D of the coil spring 221 is embedded into the first groove, to be stuck by the first groove, so as to be fastened to the rotating shaft 2231. Fastening is performed in a grooving and clamping manner, so that preparation is convenient, and no additional fastener needs to be used. This helps reduce costs and structure complexity.

In a further example, still referring to (B) in FIG. 10, the end E2 of the support part 222 may further have a hollow accommodation cavity, and the coil spring 221 and the rotating shaft 2231 are embedded into the accommodation cavity, so that impurities such as dust can be prevented from entering the cavity to corrode the coil spring 221 and affecting performance of the coil spring 221.

Optionally, to ensure integrity of a structure of the accommodation cavity, referring to (A) in FIG. 10, the accommodation cavity may be further sealed by a housing on the frame temple body 210 and a housing of the support part 222, to wrap the coil spring 221 and the rotating shaft 2231 inside.

The foregoing content describes a possible structure of the smart glasses 10. The following describes possible states of the smart glasses 10.

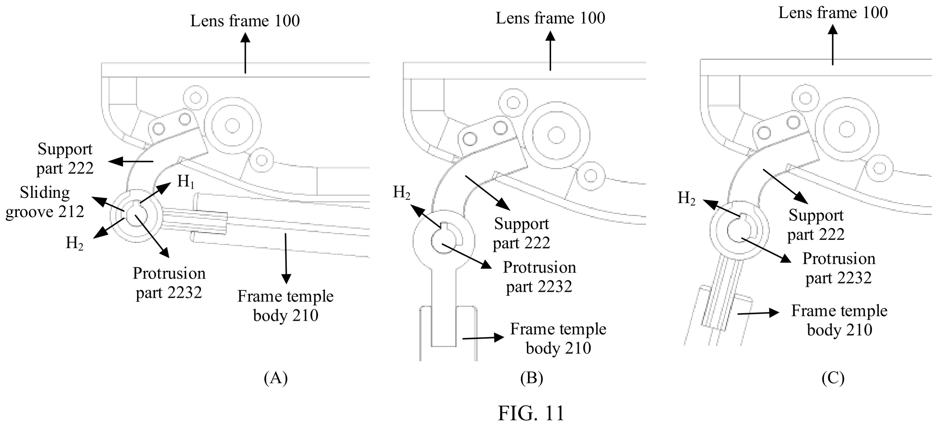

The smart glasses in the implementation solution 3 may implement three states: a folded state, an unfolded state, and an outward expanded state, as shown in FIG. 5. Further, FIG. 11 is a diagram of a partial cross-sectional structure of the smart glasses in each state. For example, (A) in FIG. 11 is a partial cross-sectional structure of the smart glasses in a folded state, (B) in FIG. 11 is a partial cross-sectional structure of the smart glasses in an unfolded state, and (C) in FIG. 11 is a diagram of a partial cross-sectional structure of the smart glasses in the outward expanded state.

First, refer to (A) in FIG. 11. When the protrusion part 2232 is located at a first edge H₁ of the sliding groove 212, the smart glasses 10 are in a folded state. In a folded state, the coil spring 221 is at an initial position.

Second, refer to FIG. 10 and (B) in FIG. 11. When the protrusion part 2232 is located at a second edge H₂ of the sliding groove 212, and the coil spring 221 is located at a first position, the smart glasses 10 are in an unfolded state. Optionally, the first position may be the initial position of the coil spring 221. In this case, a process in which the smart glasses 10 switches from the folded state to the unfolded state or switches from a switching state to the folded state may be completely implemented by using the protrusion part 2232 and the sliding groove 212, and the coil spring 221 is not involved. Therefore, the initial position of the coil spring 221 may be a position of the deformation amount corresponding to the state point b shown in FIG. 3b. For example, in a process of unfolding the smart glasses 10 from the folded state shown in (A) in FIG. 11, the frame temple body 210 rotates in a clockwise direction shown in the figure, to drive the sliding groove 212 on the frame temple body 210 to rotate in the clockwise direction shown in the figure; and when the frame temple body 210 rotates to a second edge H₂ of the sliding groove 212 and is stuck by the protrusion part 2232, the frame temple body 210 is unfolded, and the smart glasses 10 are switched to the unfolded state. In this way, in a process in which the smart glasses 10 switches from the folded state to the unfolded state, a position of the protrusion part 2232 remains unchanged. Therefore, a position of the rotating shaft 2231 on which the protrusion part 2232 is located also remains unchanged. Compared with the rotating shaft 2231 in a folded state, the rotating shaft 2231 in an unfolded state does not rotate, the end D that is of the coil spring 221 and that is fastened to the rotating shaft 2231 does not rotate either, the coil spring 221 is not deformed, and the coil spring still remains the deformation amount corresponding to the state point b shown in FIG. 3b. On the contrary, when the smart glasses 10 changes from the unfolded state shown in (B) in FIG. 11 to the folded state shown in (A) in FIG. 11, the frame temple body 210 rotates in a counterclockwise direction shown in the figure. Due to a deformation resistance capability of the coil spring 221, positions of the rotating shaft 2231 and the protrusion part 2232 disposed on the rotating shaft 2231 almost remain unchanged relative to the smart glasses 10, the frame temple body 210 rotates relative to the rotating shaft 2231, and the sliding groove 212 on the frame temple body 210 slides counterclockwise along the protrusion part 2232 on the rotating shaft 2231 until the first edge H₁ of the sliding groove 212 is stuck by the protrusion part 2232. In this process, the coil spring 221 is not obviously deformed, and always remains the deformation amount corresponding to the state point b shown in FIG. 3b.

It may be understood that, in another example, the first position may alternatively be a position at which a diameter of the coil spring 221 is less than a diameter of the coil spring 221 at the initial position. In this case, a process in which the smart glasses 10 switches from the folded state to the unfolded state or switches from a switching state to the folded state is implemented by using the coil spring 221 together with the protrusion part 2232 and the sliding groove 212, the initial position of the coil spring 221 may be a position of a deformation amount before the deformation amount corresponding to the state point b shown in FIG. 3b, and the first position of the coil spring 221 may be a position of the deformation amount corresponding to the state point b shown in FIG. 3b. Specifically, in a process in which the frame temple body 210 is unfolded by using the protrusion part 2232 and the sliding groove 212, deformation of the coil spring 221 may be simultaneously used to drive the rotating shaft 2231 to rotate to drive the frame temple body 210 to be further unfolded, bringing the smart glasses 10 into the unfolded state. In this case, the coil spring 221 is located at a position (namely, the first position) between the initial position and a second position, and the protrusion part 2232 is located at the second edge H₂ of the sliding groove 212. In this case, because the coil spring 221 rotates from the initial position to the first position in the process of unfolding the smart glasses 10, the second working area of the coil spring 221 corresponds to a deformation amount area between a deformation amount at the initial position and a deformation amount at the first position. When the deformation amount area is in a stable period, an elastic force provided by the coil spring 221 is basically the same as an elastic force provided by the coil spring 221 in an outward expansion process. When the deformation amount area is in a rapid rising period, an elastic force provided by the coil spring 221 is different from the elastic force provided by the coil spring 221 in the outward expansion process.

In addition, refer to FIG. 10 and (C) in FIG. 11. When the protrusion part 2232 is located at the second edge H₂ of the sliding groove, and the coil spring 221 is located at the second position, the smart glasses 10 are in the outward expanded state. The second position is a position at which a diameter of the coil spring 221 is less than a diameter of the coil spring 221 at the first position, or is a position at which an elastic force generated by the coil spring 221 is greater than an elastic force generated by the coil spring 221 at the first position. For example, the second position may be a position at a tail end or in the middle of the first working area of the coil spring 221, that is, a position of the deformation amount corresponding to the state point c shown in FIG. 3b, or a position of a deformation amount between the deformation amount corresponding to the state point b and the deformation amount corresponding to the state point c. For example, in a process in which the smart glasses 10 are worn on the head from the unfolded state shown in (B) in FIG. 11, the frame temple body 210 continues to rotate in a clockwise direction shown in the figure under an action of head resistance. Because the frame temple body 210 is stuck by the protrusion part 2232, the frame temple body 210 forms hard contact with the protrusion part 2232, the frame temple body 210 drives the protrusion part 2232 to rotate in a clockwise direction together, to drive the rotating shaft 2231 on which the protrusion part 2232 is located to rotate in a clockwise direction together, and rotation of the rotating shaft 2231 further drives the end D that is of the coil spring 221 and that is fastened to the rotating shaft 2231 to rotate. Because the end F of the coil spring 221 is fastened to the lens frame 100, rotation of the end D enables the coil spring 221 to be tightly rolled, a diameter of the coil spring 221 decreases, and a spacing between any two adjacent coils in the coil spring 221 decreases. In this case, to overcome this trend of tightening, the coil spring 221 generates an opposite elastic force, that is, a clamping force, and the clamping force of the coil spring 221 enables frame temple bodies 210 to be clamped on two sides of the head of the user. In addition, because the elastic force generated by the coil spring 221 in the first working area is pre-designed to be basically constant, when the smart glasses 10 are expanded outward to different positions, the clamping force on the head is also basically constant.

According to the structure of the smart glasses in the foregoing implementation solution 3, the three states, that is, folded, unfolded, and outward expanded, may be implemented by using the coil spring disposed outside the lens frame, the suspended rotating shaft, and the protrusion part disposed on the rotating shaft. In addition, in the outward expanded state, the smart glasses can provide a basically constant clamping force regardless of a position to which the smart glasses are expanded outward, so that the smart glasses can accommodate to users with various head widths, and can meet requirements of the users for wearing comfort and stability. Therefore, the smart glasses have good universality.

It should be noted that content in the foregoing implementation solution 1 to implementation solution 3 may also be combined with each other to obtain a new implementation solution. This is not limited in this application.

In addition, in any one of the foregoing implementation solution 1 to implementation solution 3, related components in the lens frame and the frame temple may be electrically connected through a structure such as a cable or a flexible printed circuit (flexible printed circuit, FPC). The foregoing content mainly describes structural designs of the lens frame and the frame temple, and does not show a fitting structure between the lens frame and the cable or the FPC and a fitting structure between the frame temple and the cable or the FPC. In actual smart glasses, an appropriate structure may be further removed from a mechanical part that needs wiring, such as the folding adjustment part or the support part in any one of the foregoing embodiments, so that a soft cable or FPC can pass through and be bent accordingly, to connect the frame temple body to an electronic component of a lens frame part. In this design, an electrical connector may be disposed inside the structure, to prevent the electrical connector from being exposed, thereby protecting the electrical connector and improving use safety of the smart glasses.

In addition, the architectural diagrams shown in the foregoing implementation solutions do not constitute a specific limitation on the smart glasses. In some other embodiments of this application, the smart glasses may include more or fewer components than those shown in the figure, some components may be combined, some components may be split, different component arrangements may be used, or different position arrangements may be used. This is not specifically limited.

In addition, the foregoing content describes possible structures of glasses by using smart glasses as an example. However, the structures may also be applied to another apparatus including a glasses structure, for example, a smart helmet with glasses. Application of the glasses structure is not specifically limited in this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. "At least one of the following items (pieces)" or a similar expression thereof indicates any combination of these items, including a single item (piece) or any combination of a plurality of items (pieces). For example, at least one item (piece) of a, b, or c may indicate a, b, c, "a and b", "a and c", "b and c", or "a, b, and c", where a, b, and c may be singular or plural. In text descriptions of this application, the character "/" generally represents an "or" relationship between associated objects. In a formula of this application, the character "/" represents a "division" relationship between associated objects. In addition, in this application, the term "for example" is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not used to limit the scope of embodiments of this application. Sequence numbers of the foregoing processes do not mean an execution sequence, and the execution sequence of the processes should be determined based on functions and internal logic of the processes. The terms "first", "second", and the like are intended to distinguish between similar objects but do not necessarily indicate a specific order or sequence. In addition, the terms "include", "have", or any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

## Claims

1. Smart glasses, comprising a lens frame and frame temples, wherein
the frame temple comprises a frame temple body and a coil spring adjustment part, the coil spring adjustment part comprises a coil spring, a first end of the coil spring is connected to the lens frame, and a second end of the coil spring is connected to the frame temple body.

2. The smart glasses according to claim 1, wherein the coil spring adjustment part further comprises a support part, and the support part is connected between the second end of the coil spring and the frame temple body.

3. The smart glasses according to claim 2, wherein the lens frame comprises a frame body, and the first end of the coil spring is fastened in the frame body.

4. The smart glasses according to claim 3, wherein the frame body has a fastening shaft, a first groove is disposed on the fastening shaft, and the first end of the coil spring is embedded into the first groove.

5. The smart glasses according to claim 4, wherein the support part has a hollow accommodation cavity, and the coil spring and the fastening shaft are embedded into the accommodation cavity.

6. The smart glasses according to claim 5, wherein a housing of the accommodation cavity has a first opening, and the second end of the coil spring is bent and embedded into the first opening.

7. The smart glasses according to any one of claims 2 to 6, wherein the coil spring adjustment part further comprises a folding adjustment part, and the folding adjustment part is connected between the support part and the frame temple body.

8. The smart glasses according to claim 7, wherein a limiting component is provided on the lens frame, and the smart glasses meet any one of the following states:
when the support part is located at a first edge of the limiting component, and the folding adjustment part is in a folded state, the smart glasses are in a folded state;
when the support part is located at the first edge of the limiting component, and the folding adjustment part is in an unfolded state, the smart glasses are in an unfolded state; and
when the support part is located at a second edge of the limiting component or between the first edge and the second edge, the smart glasses are in an outward expanded state.

9. The smart glasses according to claim 1, wherein the coil spring adjustment part further comprises a support part, and the support part is connected between the lens frame and the first end of the coil spring.

10. The smart glasses according to claim 9, wherein the lens frame has a first hole, the support part passes through the first hole, a first end of the support part is fastened in the lens frame, and a second end of the support part is fastened to the first end of the coil spring.

11. The smart glasses according to claim 10, wherein the second end of the support part has a fastening shaft, a first groove is disposed on the fastening shaft, and the first end of the coil spring is embedded into the first groove.

12. The smart glasses according to claim 11, wherein the second end of the support part has a hollow accommodation cavity, and the coil spring and the fastening shaft are embedded into the accommodation cavity.

13. The smart glasses according to any one of claims 10 to 12, wherein the second end of the support part has a limiting hole, and the frame temple body passes through the limiting hole and is fastened to the second end of the coil spring.

14. The smart glasses according to claim 13, wherein the smart glasses meet any one of the following states:
when the frame temple body is located at a first edge of the limiting hole, the smart glasses are in a folded state; and
when the frame temple body is located at a second edge of the limiting hole or between the first edge and the second edge, the smart glasses are in an outward expanded state.

15. The smart glasses according to claim 9, wherein the coil spring adjustment part further comprises a rotation part, the rotation part comprises a rotating shaft, and a second end of the support part and the frame temple body are separately sleeved on the rotating shaft.

16. The smart glasses according to claim 15, wherein the second end of the coil spring is fastened to the rotating shaft.

17. The smart glasses according to claim 15 or 16, wherein the rotating shaft has a protrusion part, the frame temple body comprises a cover plate, a sliding groove is disposed on the cover plate, the rotating shaft is covered below the cover plate, and the protrusion part is embedded into the sliding groove.

18. The smart glasses according to claim 17, wherein the smart glasses meet any one of the following states:
when the protrusion part is located at a first edge of the sliding groove, the smart glasses are in a folded state;
when the protrusion part is located at a second edge of the sliding groove, and the coil spring is located at a first position, the smart glasses are in an unfolded state; and
when the protrusion part is located at the second edge of the sliding groove, and the coil spring is located at a second position, the smart glasses are in an outward expanded state, wherein
a diameter of the coil spring at the second position is less than a diameter of the coil spring at the first position.
